# EUROPÄISCHE PATENTSCHRIFT

(11) **EP 3 216 347 B1**
(45) Veröffentlichungstag und Bekanntmachung des Hinweises auf die Patenterteilung: **12.12.2018**
(21) Anmeldenummer: 17165893.3
(22) Anmeldetag: 11.10.2011
(51) Int. Cl.: A21C 9/08

(54) **VERFAHREN ZUM AUSRICHTEN VON GEWICKELTEN TEIGPRODUKTEN IN EINER DEFINIERTEN SCHLUSSLAGE**
METHOD FOR ORIENTING WOUND DOUGH PRODUCTS IN A DEFINED END POSITION
PROCÉDÉ POUR ORIENTER DES PRODUITS À BASE DE PÂTE ENROULÉE DANS UNE POSITION FINALE DÉFINIE

(30) Priorität: 09.11.2010 DE 102010050671; 11.02.2011 DE 102011011049
(43) Veröffentlichungstag der Anmeldung: 13.09.2017
(62) Teilanmeldung aus: 11817294.9
(73) Patentinhaber: Fritsch GmbH, 97348 Markt Einersheim (DE)
(72) Erfinder: BERNHARDT, Udo, 97346 Iphofen (DE)
(74) Vertreter: advotec.

(56) Entgegenhaltungen:
- DE-U1-202008 003 923
- NL-C2- 1 025 310

## Beschreibung

Die Erfindung betrifft mehrere Verfahren zum Ausrichten von gewickelten Teigprodukten, beispielsweise Croissants, in einer definierten Schlusslage.

Bei der industriellen Herstellung von gewickelten Teigprodukten, insbesondere Croissants, ist es gewünscht, dass beim Backen der gewickelten Teigwaren das außen am Umfang überstehende Ende des gewickelten Teigbandes, der so genannte Schluss, in einer definierten Lage liegt. Beispielsweise ist es beim Garen oder Backen von Croissants bevorzugt, dass der Schluss zwischen dem Croissant selbst und der Backunterlage angeordnet ist, um ein Aufstehen des Schlusses während des Backprozesses zu verhindern, da ein weit überstehender Schluss leicht verbrennt und einen Qualitätsmangel darstellt. Insgesamt ist eine definierte Schlusslage bei gewickelten Teigprodukten grundsätzlich von Bedeutung, um reproduzierbare Backergebnisse zu ermöglichen. Für das Ausrichten von gewickelten Teigprodukten in einer definierten Schlusslage gibt es aus dem Stand der Technik verschiedene Möglichkeiten. In der einfachsten Variante werden die gewickelten Teigprodukte manuell um ihre Längsachse gedreht, wobei der Bediener durch diese Ausrichtbewegung eine definierte Schlusslage, bei der der Schluss beispielsweise unter dem Croissant zum Liegen kommt, einstellt. Diese manuelle Ausrichtung ist jedoch zeitaufwendig und arbeitsintensiv und deshalb nur für sehr kleine Stückzahlen geeignet.

Gemäß einem anderen Lösungsansatz wird versucht, die Teigprodukte in definierter Weise zu wickeln, so dass der Schluss des Teigproduktes am Ende des Wickelvorgangs die gewünschte definierte Schlusslage einnimmt. Ein solcher Lösungsansatz wird beispielsweise durch die EP 2 236 039 A1 beschrieben. Bei der dort beschriebenen Wickelvorrichtung kann die Länge der Wickelstrecke verändert werden, um auf diese Weise den Gesamtrotationswinkel während des Wickelns zu verändern. Nach Justierung der Wickelvorrichtung werden die Teigprodukte dann jeweils in gleicher Weise gewickelt und verlassen die Wickelvorrichtung in der gewünschten Schlusslage. Nachteilig an dieser Vorrichtung ist es, dass die Vorrichtung Prozessstörungen, wie sie beispielsweise durch Schwankungen der Dicke des zu wickelnden Teigstücks hervorgerufen werden, nicht ausgleichen kann. Insofern ist diese Vorrichtung sehr störungsanfällig und muss bei Auftreten von Prozessstörungen, beispielweise bei Änderungen der Dicke der Teigstücke, jeweils nachjustiert werden.

Eine weitere Vorrichtung zum schlusslagengenauen Ausrichten von gewickelten Teigprodukten ist aus der EP 1 747 724 A2 bekannt. Bei dieser Vorrichtung ist ein Sensor zur Detektion der Lage des Schlusses nach dem Wickeln des Teigproduktes vorhanden. Abhängig vom Messergebnis dieses Sensors wird das Teigprodukt anschließend um einen Winkelbetrag um seine Längsachse gedreht, um die gewünschte Schlusslage dadurch einzustellen. Prozessstörungen können von dieser Vorrichtung jederzeit erkannt und durch entsprechende Änderung des Drehwinkels ausreguliert werden. Nachteilig an dieser Vorrichtung ist jedoch der hohe gerätetechnische Aufwand, da beispielsweise eine Videokamera und ein Bildverarbeitungssystem zur Erkennung der Lage des Schlusses nach Ende des Wickelvorgangs notwendig ist.

Aus dem Stand der Technik ist zudem ein Verfahren zum Ausrichten von Croissants aus der DE 20 2008 003 923 U1 bekannt, welches mit einer berührungslosen Keramiksensorik zusammenwirkt. Dabei versetzt eine Richtwalze das Teigstück in eine Rotation, währenddessen der Abstand zwischen dem Sensor und dem Teigstück permanent gemessen wird. Aus dieser Abstandsmessung wird dann die Lage des Teigstückschlusses abgeleitet und das Teigstück in einer definierten Lage des Teigstückschlusses angehalten. Nachteilig bei diesem Ausrichtsystem ist es jedoch, dass zur Feststellung der Lage des Teigstückschlusses eine entsprechende Sensorik vorhanden sein muss.

Ausgehend von diesem Stand der Technik ist es deshalb Aufgabe der vorliegenden Erfindung, ein neues Verfahren zur Ausrichtung von gewickelten Teigprodukten in einer definierten Schlusslage vorzuschlagen, das mit einfachen Mitteln zuverlässig ausgeführt werden kann und dabei eine hohe Prozesssicherheit auch bei Störeinflüssen auf den Wickelprozess, beispielsweise verursacht durch Schwankungen der Dicke oder der Teigkonsistenz der zu wickelnden Teigstücke, ermöglicht.

Diese Aufgabe wird durch mehrere Verfahren gemäß den unabhängigen Hauptansprüchen gelöst.

Bevorzugte Ausführungsformen der Erfindung sind Gegenstand der Unteransprüche.

Die erfindungsgemäßen Verfahren beruhen auf dem Grundgedanken, dass der Rollwiderstand des gewickelten Teigprodukts eine Unstetigkeit aufweist, die durch den am Umfang des Teigprodukts überstehenden Schluss verursacht wird. Rollt nämlich das gewickelte Teigprodukt mit einem Drehsinn, der der Wickelrichtung bzw. der Förderrichtung des Teigstücks entspricht, über eine Unterlage, so steigt der Rollwiderstand signifikant an, sobald der überstehende Schluss auf der Unterlage zur Anlage kommt. Um das Teigprodukt nach Erreichen dieser Lage, in der der Schluss auf der Unterlage zur Anlage kommt, weiter abrollen zu können, muss das zum Antrieb des Teigprodukts vorgesehene Drehmoment bzw. die zum Antrieb vorgesehene Antriebskraft so weit erhöht werden, bis der Schwerpunkt des Teigprodukts um das Maß des Überstands des Schlusses angehoben ist. Dieses Ansteigen des Rollwiderstands beim Abrollen des Teigprodukts auf einer Unterlage nach Erreichen der Lage, in der der Schluss auf der Unterlage zur Anlage kommt, macht sich das erfindungsgemäße Verfahren zum Ausrichten der gewickelten Teigprodukte zu Nutze.

Bei der ersten erfindungsgemäßen Verfahrensvariante werden die gewickelten Teigprodukte entlang einer vorgegebenen Strecke oder für eine vorgegebene Zeit mit einem vorgegebenen Antriebsmoment bzw. einer vorgegebenen Antriebskraft um die Längsachse rotierend angetrieben, so dass die Produkte auf der Unterlage abrollen. Die Länge der Abrollstrecke bzw. die Dauer der Abrollzeit sollte dabei zumindest so groß gewählt werden, dass gewährleistet ist, dass die Teigprodukte zumindest eine volle Umdrehung auf der Unterlage abrollen können. Der Drehsinn der Abrollbewegung des Teigprodukts muss so gewählt werden, dass er der Wickelrichtung von innen nach außen des gewickelten Teigstücks entspricht. Denn bei Abrollen des Teigstücks in Wickelrichtung gelangt der überstehende Schluss des Teigstücks auf der Unterlage zur Anlage und hat die Wirkung eines Bremskeils. Sobald der überstehende Schluss auf der Unterlage zur Anlage kommt, hat das Teigprodukt damit die gewünschte definierte Schlusslage erreicht und wird durch den vom überstehenden Schluss verursachten Rollwiderstand gestoppt. Die die Rollbewegung verursachende Antriebskraft bzw. das die Rollbewegung verursachende Antriebsmoment muss dabei unterhalb einer vorgegebenen Grenze gewählt werden, so dass der vom Schluss verursachte Rollwiderstand nicht überwunden werden kann. Im Ergebnis werden die Teigprodukte also durch den vom überstehenden Schluss verursachten Rollwiderstand dadurch ausgerichtet, dass die Abrollbewegungen auf der Unterlage immer dann gestoppt werden, sobald der Schluss auf der Unterlage zur Anlage kommt. Auf eine Lagesensorik zur Bestimmung der Lage des Schlusses zu Beginn des Ausrichtprozesses kann dabei verzichtet werden, da die unterschiedlichen Anfangslagen des Schlusses durch entsprechend unterschiedliche Abrolllängen auf der Unterlage ausgeglichen werden. Da sich der Rollwiderstand des abrollenden Teigstücks durch den Überstand des Schlusses signifikant ändert, ist diese Änderung des Rollwiderstands zuverlässig geeignet, die Ausrichtung der Teigstücke zu bewirken, wobei auch Prozessstörgrößen, beispielsweise die Änderung der Teigdicke oder der Teigkonsistenz, keine Störung des Ausrichtprozesses verursachen.

Die Größe des Antriebsmoments bzw. der Antriebskraft zur Verursachung der Abrollbewegung des Teigprodukts auf der Unterlage ist auf den jeweiligen Ausrichtprozess abzustimmen. Das zum Antrieb der Teigprodukte vorgesehene Antriebsmoment bzw. die dazu vorgesehene Antriebskraft muss dabei jedenfalls so groß sein, dass das Teigprodukt nach dem Ende des Wickelprozesses in eine rotierende Abrollbewegung versetzt werden kann. Umgekehrt darf das Antriebsmoment bzw. die Antriebskraft nur so groß sein, dass die Abrollbewegung durch den vom Schluss verursachten Rollwiderstand zuverlässig gestoppt und nach Erreichen dieser definierten Schlusslage zuverlässig ausgeschlossen wird.

Welche Antriebskraft zum Antrieb der Teigprodukte entlang der zum Ausrichten vorgesehenen Abrollstrecke genutzt wird, ist grundsätzlich beliebig. Gemäß einer ersten bevorzugten Ausführungsvariante wird dazu eine Hangabtriebskraft benutzt. Dies bedeutet mit anderen Worten, dass die Teigprodukte auf einer geneigten Unterlage abrollen, wobei die Neigung der Unterlage zumindest so groß ist, dass die auf die gewickelten Teigprodukte wirkenden Hangabtriebskräfte ausreichen, um die Abrollbewegung auszulösen und aufrechtzuerhalten. Umgekehrt ist die Neigung der Unterlage aber nur so groß, dass die durch die Neigung verursachte Hangabtriebskraft nicht ausreicht, um den vom überstehenden Schluss verursachten Rollwiderstand zu überwinden, so dass die abrollenden Teigstücke durch die Anlage des Schlusses an der Oberseite der geneigten Unterlage zuverlässig gestoppt werden.

Alternativ zur Nutzung einer geneigten Unterlage für den Antrieb der abrollenden Teigprodukte kann auch ein umlaufender Bürstenantrieb eingesetzt werden. Die Borsten des Bürstenantriebs sind dabei so zu gestalten, dass sie beim Umlauf des Bürstenantriebs an den Teigprodukten vorbeistreichen und auf diese Weise Gleitreibungskräfte übertragen. Die Gesamtheit dieser Gleitreibungskräfte führt dabei zu einem Drehmoment, das die Abrollbewegung der Teigprodukte auf einer Unterlage, die dann beispielsweise auch horizontal verlaufen kann, bewirkt.

Gemäß einer weiteren Alternative, die insbesondere auch für horizontal verlaufende Unterlagen geeignet ist, wird das für die Abrollbewegung der Teigprodukte notwendige Antriebsmoment durch eine Beschleunigung oder Abbremsung der gewickelten Teigprodukte erzeugt. Durch die Änderung der Geschwindigkeit der gewickelten Teigprodukte wirkt ein Drehmoment auf die Teigprodukte. Dieses Drehmoment kann als Antriebsmoment genutzt werden, um die Teigprodukte in der gewünschten Weise zur lagerichtigen Ausrichtung auf der Unterlage abrollen zu lassen.

Das Abbremsen oder Beschleunigen der Teigprodukte kann bevorzugt dadurch erreicht werden, dass die Teigprodukte von einem ersten Förderband auf ein zweites Förderband übergeben werden. Die Fördergeschwindigkeiten der beiden Förderbänder sind dabei unterschiedlich, so dass sich der gewünschte Beschleunigungs- oder Abbremseffekt ergibt. Auf diese Weise rollen die Teigprodukte auf dem zweiten Förderband so lange in der gewünschten Drehrichtung ab, bis der Schluss auf der Unterlage zur Anlage kommt und dadurch das Teigprodukt abstoppt. Die Differenz der Fördergeschwindigkeiten der beiden Förderbänder sollte dabei maximal so groß sein, dass ein Überrollen des Schlusses während des Abrollens ausgeschlossen ist.

Erfindungsgemäß wird die Änderung des Rollwiderstands, die beim Abrollen des Teigstücks im Bereich des überstehenden Schlusses auftritt, zur Ausrichtung der Teigstücke in einer definierten Schlusslage genutzt. Um die Zuverlässigkeit dieser Ausrichtmethode weiter zu erhöhen, ist es besonders vorteilhaft, wenn das Teigstück vor dem Wickeln, insbesondere durch abschnittsförmiges Walzen, so umgeformt wird, dass der Schluss des Teigstücks eine Verdickung bildet. Dies bedeutet mit anderen Worten, dass die Dicke des Teigstücks im Bereich des Schlusses größer ist als der Rest des Teigstückes. Diese größere Dicke des Schlusses führt dazu, dass der Schluss weiter radial übersteht und dadurch ein entsprechend größerer Rollwiderstand verursacht wird. Dementsprechend kann dann das Teigstück bei der Abrollbewegung mit einem etwas größeren Antriebsmoment bzw. mit einer etwas größeren Antriebskraft angetrieben werden, da die Grenze, bei der das Teigstück auch über den überstehenden Schluss abrollen würde, entsprechend höher liegt.

Mit dem erfindungsgemäßen Verfahren wird das Teigprodukt in einer definierten Schlusslage ausgerichtet, bei der der überstehende Schluss auf der Unterlage anliegt. Diese Schlusslage entspricht aber vielfach noch nicht der Schlusslage, die für die Weiterverarbeitung der Teigprodukte wünschenswert ist. Um diese zweite Schlusslage zu erreichen, ist es deshalb besonders vorteilhaft, wenn das Teigprodukt nach Erreichen der ersten definierten Schlusslage durch die Ausführung des erfindungsgemäßen Verfahrens um einen definierten Winkelbetrag gerollt wird. Da aber die Winkellage der ersten definierten Schlusslage bekannt ist, kann zur Einstellung der zweiten definierten Schlusslage ein fest eingestellter Abrollwinkel benutzt werden.

Gemäß einer bevorzugten Verfahrensvariante wird das Teigprodukt von seiner ersten definierten Schlusslage, bei der der überstehende Schluss auf der Unterlage zur Anlage kommt, in eine zweite definierte Schlusslage gerollt, bei der der überstehende Schluss zwischen dem Teigstück und der Unterlage zum Liegen kommt. Diese zweite definierte Schlusslage ist besonders geeignet, um Croissants mit einem definierten Backergebnis zu produzieren.

Weiterhin ist es bevorzugt, wenn das gewickelte Teigprodukt in der zweiten Schlusslage zusammengedrückt wird und der Schluss des gewickelten Teigstücks zwischen dem Teigstück und der Unterlage so zusammengedrückt wird, dass der Schluss gegen den Umfang des gewickelten Teigstücks gedrückt und angelegt wird. Auf diese Weise kann eine besonders gleichmäßige und reproduzierbare Form des gebackenen Teigstücks realisiert werden, wobei gleichzeitig ein Verrollen des Teigstückes im weiteren Prozess verhindert wird.

Durch Anwendung des erfindungsgemäßen Verfahrens können gewickelte Teigprodukte, die vor dem Backen auch noch um ihre Hochachse gebogen werden, ohne manuelle Ausrichtung verarbeitet werden. Gemäß einer bevorzugten Verfahrensvariante ist es deshalb vorgesehen, dass das gewickelte Teigprodukt nach dem Ausrichten in einer Schlusslage um seine Hochachse zur Annäherung der beiden Spitzen des gewickelten Teigstücks gebogen wird. Insbesondere kann es dabei vorgesehen sein, dass die Spitzen des gewickelten Teigproduktes miteinander in Kontakt gebracht und beispielsweise miteinander verpresst werden, um die gebogene Form des gewickelten Teigproduktes zu fixieren.

Verschiedene Varianten der Erfindung werden in den Zeichnungen nachfolgend beispielhaft erläutert.

Es zeigen:
- Fig. 1: ein trapezförmiges Teigstück zur Herstellung eines gewickelten Teigprodukts, nämlich eines Croissants, in Ansicht von oben;
- Fig. 2: das Teigstück gemäß Fig. 1 nach dem Walzen gemäß einer ersten Verfahrensvariante;
- Fig. 3: das Teigstück gemäß Fig. 1 nach dem Walzen gemäß einer zweiten Verfahrensvariante;
- Fig. 4: das aus dem Teigstück gemäß Fig. 1 gewickelte Teigprodukt in Ansicht von oben;
- Fig. 5: das gewickelte Teigstück gemäß Fig. 4 im schematisierten Querschnitt;
- Fig. 6: eine erste Vorrichtung zum Ausrichten des gewickelten Teigprodukts gemäß Fig. 4 in einer definierten Schlusslage;
- Fig. 7: eine zweite Vorrichtung zum Ausrichten des gewickelten Teigprodukts gemäß Fig. 4 in einer definierten Schlusslage;
- Fig. 8: eine dritte Vorrichtung zum Ausrichten des gewickelten Teigprodukts gemäß Fig. 4 in einer definierten Schlusslage;
- Fig. 9: eine schematisiert dargestellte Produktionslinie zur Herstellung von Croissant-Rohlingen, die eine Vorrichtung gemäß Fig. 6 umfasst.

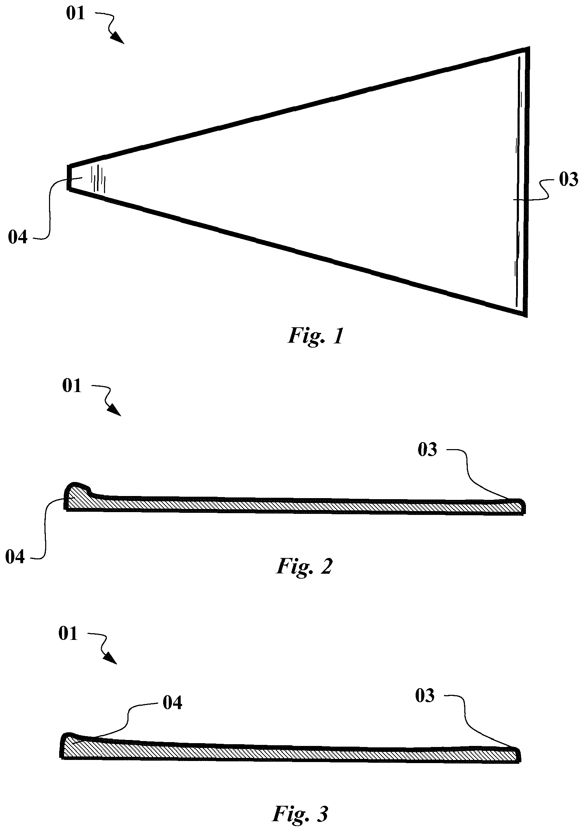

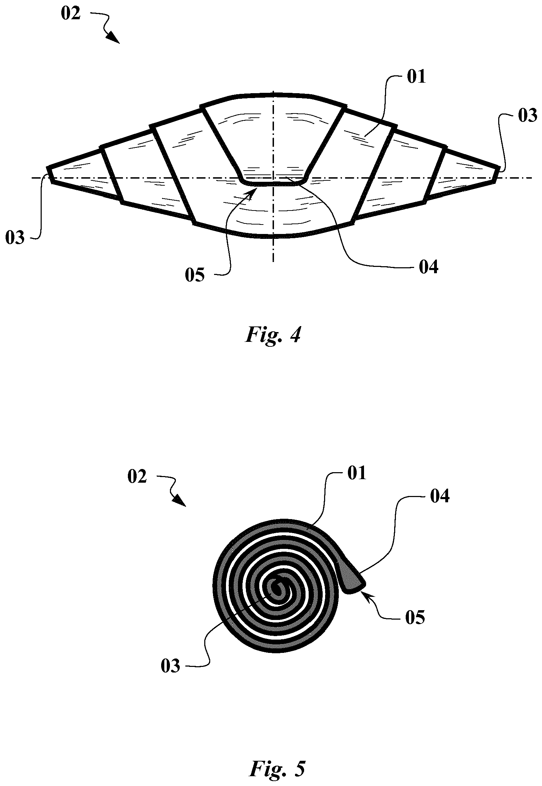

Fig. 1 zeigt ein trapezförmiges Teigstück 01, aus dem ein gewickeltes Teigprodukt 02 (siehe Fig. 4) hergestellt werden kann. Das Teigstück 01 weist eine Basis 03 und ein schmales Ende 04 auf. Durch diese trapezförmige Form des Teigstücks 01 kann beim Wickeln des Teigstücks 01 um die Basis 03 herum eine Wickelform erreicht werden, wie sie der gewohnten Form von Croissants entspricht. Das schmale Ende 04 kann dabei auch etwas breiter oder ganz spitz sein.

Fig. 2 und Fig. 3 zeigen das Teigstück 01 jeweils im Querschnitt, wobei sich Fig. 2 und Fig. 3 durch zwei verschiedene Varianten beim Auswalzen des Teigstücks vor dem Wickeln unterscheiden. Bei der in Fig. 2 dargestellten Variante wird das Teigstück 01, dessen Dicke zunächst der Dicke im Bereich des schmalen Endes 04 entspricht, entlang seiner Längserstreckung mit einer gleichmäßigen Dicke ausgewalzt, so dass das schmale Ende 04 nach dem Walzen eine Verdickung bildet. Bei der Variante gemäß Fig. 3 wird die Walze zum Auswalzen des Teigstücks 01 in Richtung des schmalen Endes 04 langsam angehoben, so dass sich die Dicke des Teigstücks 01 in Richtung des schmalen Endes 04 kontinuierlich vergrößert. Aber auch hier bildet das schmale Ende 04 die maximale Verdickung des Teigstücks 01.

Fig. 4 zeigt das aus dem Teigstück 01 gewickelte Teigprodukt 02, das die Form eines ungebogenen Croissants aufweist. Den Kern des Teigprodukts 02 bildet die Basis 03, um die das Teigstück 01 herumgewickelt wird. Das schmale Ende 04 bildet am Außenumfang des Teigprodukts 02 einen überstehenden Schluss 05.

Fig. 5 zeigt das Teigprodukt 02 im Querschnitt. Man erkennt die Basis 03 im Zentrum des Teigprodukts 02 und den überstehenden Schluss 05, der von der Verdickung des schmalen Endes 04 des Teigstücks 01 gebildet wird.

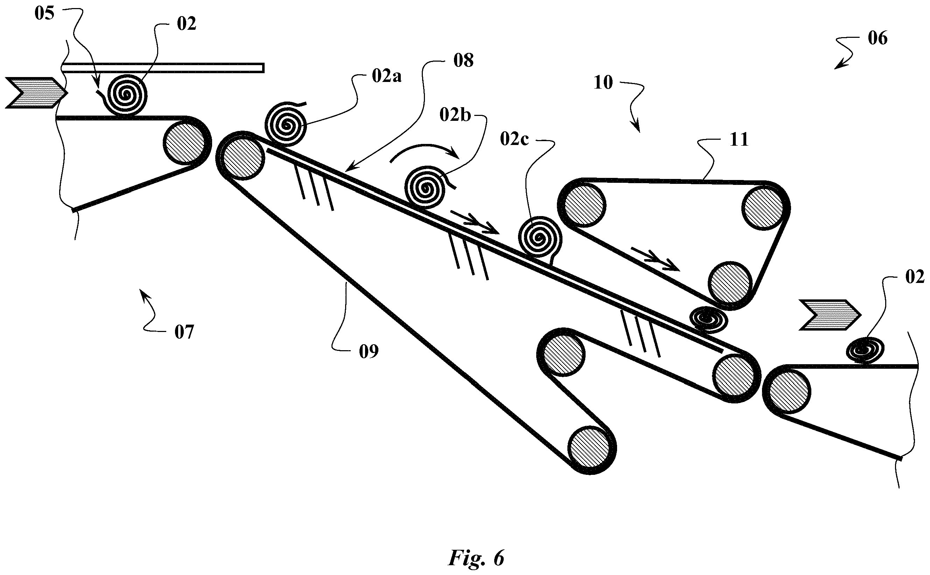

Fig. 6 zeigt eine Vorrichtung 06 zum Ausrichten der Teigprodukte 02 in einer definierten Schlusslage. In einer der Vorrichtung 06 vorgeschalteten Wickelvorrichtung 07 werden aus Teigstücken 01 Teigprodukte 02 gewickelt, wobei die Lage des Schlusses 05 bei Verlassen der Wickelvorrichtung 07 undefiniert ist. Die Teigstücke 02 werden von der Wickelvorrichtung 07 an die nachgelagerte Vorrichtung 06 mit undefinierter Schlusslage übergeben. Die Vorrichtung 06 umfasst dabei eine geneigte Unterlage 08, die von einem umlaufenden Förderband 09 gebildet wird. Sobald ein Teigprodukt 02 auf die Unterlage 08 übergeben ist, beginnt das Teigprodukt 02 auf der Unterlage abzurollen, wobei die Abrollbewegung durch die von der Neigung der Unterlage 08 verursachte Hangabtriebskraft gestartet und aufrechterhalten wird. Die Neigungsrichtung der Unterlage 08 ist dabei so auf die Wickelrichtung von innen nach außen der Teigprodukte 02 abgestimmt, dass in der dargestellten Ausführungsform das Teigprodukt 02 eine Wickelrichtung im Uhrzeigersinn aufweist und die Teigprodukte 02 auf der geneigten Unterlage 08 in Uhrzeigersinn abrollen. Auf diese Weise wird gewährleistet, dass der überstehende Schluss 05 nach einer nicht vordefinierten Abrollstrecke auf der Unterlage 08 zur Anlage kommt und damit die erste definierte Schlusslage einnimmt. Das Teigprodukt 02c zeigt das Teigprodukt 02 nach Erreichen dieser definierten Schlusslage. Durch die Anlage des überstehenden Schlusses 05 auf der Unterlage 08 wird die Abrollbewegung des Teigprodukts 02 abgestoppt, wobei die Neigung der Unterlage 08 nicht ausreicht, um das Teigprodukt 02 über den überstehenden Schluss 05 hinwegrollen zu lassen.

Nach dem Ausrichten der Teigstücke 02 sind außerdem noch ein Justieren der Schlusslage und ein Flachdrücken der Teigstücke vorgesehen. Dazu kommt eine kombinierte Justier- und Flachdrückeinrichtung 10 zum Einsatz, die von einem umlaufenden Förderband 11 gebildet wird. Das Förderband 11 ist dem Förderband 09 gegenüberliegend angeordnet, wobei der Abstand zwischen dem Förderband 11 und dem Förderband 09 in Transportrichtung der Teigstücke 02 enger wird. Durch diesen sich verengenden Spalt werden die Teigstücke 02 hindurchgefördert. Aufgrund einer Differenzgeschwindigkeit beim Umlauf des Förderbandes 11 gegenüber der Umlaufgeschwindigkeit des Förderbandes 09 werden die Teigstücke dabei um einen festgelegten Winkelbetrag gedreht, so dass die Teigstücke 02 beim Verlassen der Vorrichtung 10 eine zweite definierte Schlusslage einnehmen.

Die Umlaufgeschwindigkeit des Förderbandes 09 ist dabei größer als die Umlaufgeschwindigkeit des Förderbandes 11, so dass das Teigstück 02 beim Justieren in der zweiten Schlusslage nicht über den Schluss 05 hinwegrollt, sondern in Gegenrichtung drehend, im dargestellten Beispiel also gegen den Uhrzeigersinn, bewegt wird. Dadurch wird die Bildung von Falten im Teigstück beim Justieren der zweiten Schlusslage ausgeschlossen. In dieser zweiten definierten Schlusslage wird der Schluss 05 zwischen dem Teigstück 02 und der Unterlage 08 positioniert und in dieser Lage gegen das Teigstück 02 gedrückt. Nach Verlassen der Vorrichtung 10 werden die Teigstücke 02 in der zweiten definierten Schlusslage zur Weiterverarbeitung weitergefördert.

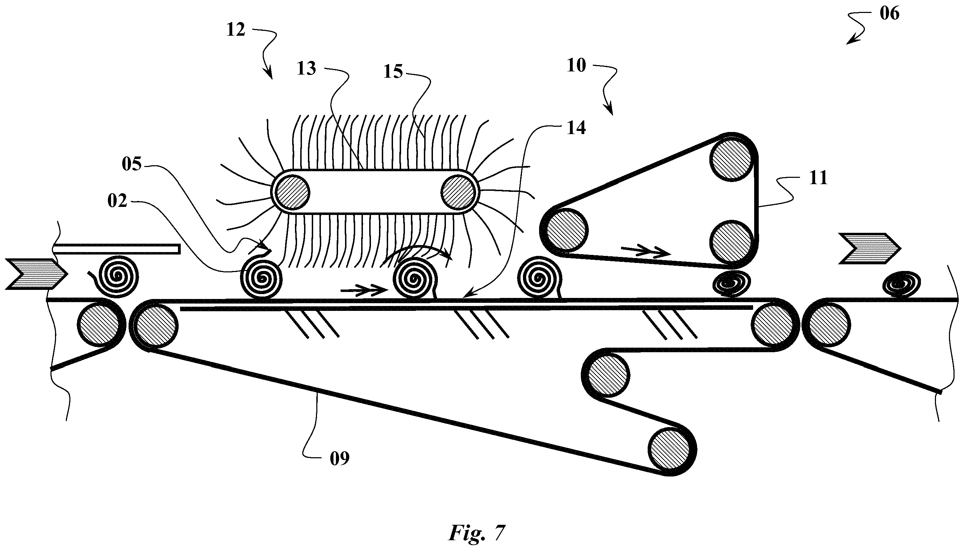

Fig. 7 zeigt eine zweite Vorrichtung 12 zum Ausrichten der Teigstücke 02 in der ersten definierten Schlusslage. Nach dem Wickeln der Teigstücke 02 in der Wickelvorrichtung 07 werden diese wiederum an die nachgeordnete Vorrichtung 12 übergeben, in der ein umlaufender Bürstenantrieb 13 vorgesehen ist, um die Teigstücke 02 auf der Unterlage 14, die horizontal ausgerichtet ist, abrollend anzutreiben. Die zunächst noch mit undefinierter Schlusslage positionierten Teigstücke 02 gelangen dabei in Gleitreibungskontakt mit den Borsten 15 des Bürstenantriebs 13, wobei durch die unterschiedlichen Antriebsgeschwindigkeiten des Förderbands 09 und des Bürstenantriebs 13 eine Gleitreibungskraft auf die Teigstücke 02 übertragen wird, die die Teigstücke 02 im Uhrzeigersinn auf der Unterlage 14 abrollen lässt. Die Teigstücke 02 rollen dabei so lange auf der Unterlage 14 ab, bis der überstehende Schluss 05 auf der Unterlage 14 zur Anlage kommt und dadurch die Abrollbewegung abstoppt. Die Länge der Bürsten in Förderrichtung sollte länger sein als der Umfang des Croissants. Die Länge des Bürstenantriebs ist bevorzugt so gewählt, dass die Bürsten nach etwas mehr als einer Umdrehung des Croissants außer Eingriff kommen. Damit hat das Teigstück 02 die definierte erste Schlusslage erreicht und wird anschließend mit der Vorrichtung 10 wiederum kombiniert justiert und zusammengedrückt.

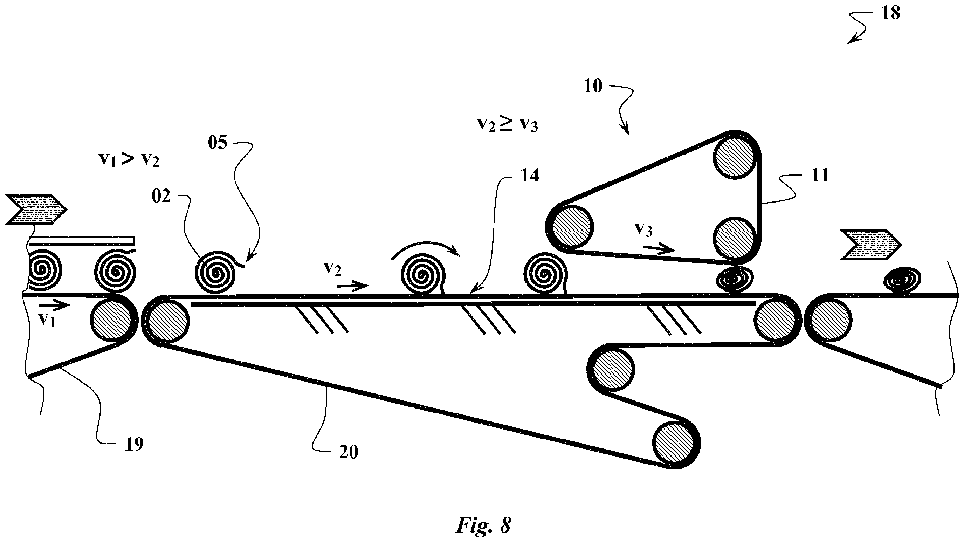

Fig. 8 zeigt eine dritte Vorrichtung 18 mit zwei Förderbändern 19 und 20. Die Fördergeschwindigkeit v₁ des Förderbandes 19 ist dabei höher, beispielsweise doppelt so hoch, als die Fördergeschwindigkeit v₂ des Förderbandes 20. Aufgrund dieser Differenz der Fördergeschwindigkeiten v₁ und v₂ ergibt es sich, dass die Teigstücke 02 bei der Übergabe vom Förderband 19 auf das Förderband 20 abgebremst werden. Durch diese Abbremsung der Teigstücke 02 wirkt ein Drehmoment auf die Teigstücke 02, das die Teigstücke im Uhrzeigersinn auf dem Förderband 20 abrollen lässt, bis der Schluss 05 auf der Unterlage zur Anlage kommt. Die Fördergeschwindigkeiten v₁ und v₂ der Förderbänder 19 und 20 können variabel verändert, insbesondere variabel geregelt, werden, um Drehsinn und Stärke des auf die Teigstücke 02 wirkenden Drehmoments variabel verändern zu können. Wahlweise kann die Fördergeschwindigkeit v₁ des zuführenden Förderbandes größer oder kleiner als die Fördergeschwindigkeit v₂ des nachgelagerten abnehmenden Förderbandes sein.

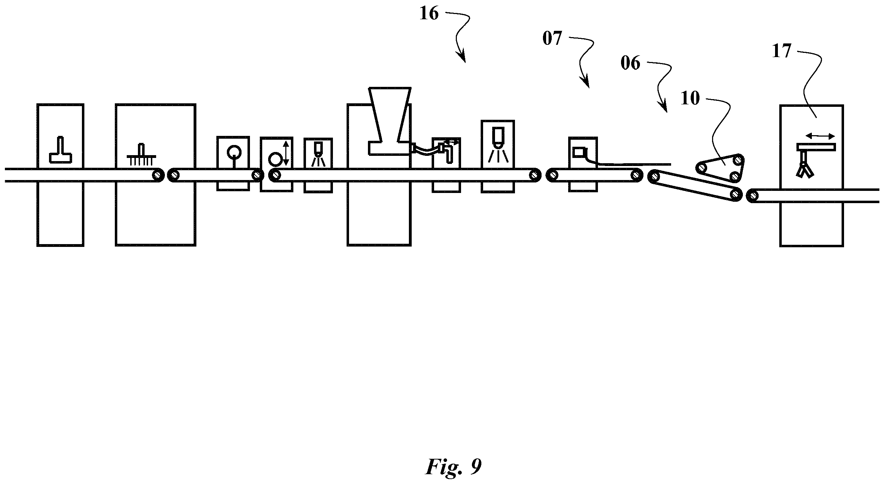

Fig. 9 zeigt eine Produktionslinie 16 zur Herstellung von Croissants. Nach Durchlaufen diverser Bearbeitungsstationen werden die Teigstücke 01 in einer Wickelvorrichtung 07 zur Herstellung von gewickelten Teigprodukten 02 bearbeitet. Daran anschließend werden die Teigstücke 02 mit zunächst noch undefinierter Schlusslage in der Vorrichtung 06 ausgerichtet und mittels der Vorrichtung 10 justiert und flachgedrückt. Anschließend können die Teigprodukte 02 mit nun definierter Schlusslage mittels eines Greifersystems 17 um ihre Längsachse gebogen werden.

## Patentansprüche

1. Verfahren zum Ausrichten von gewickelten Teigprodukten (02) in einer definierten Schlusslage, wobei das Teigprodukt (02) durch Wickeln eines dreieckförmigen oder trapezförmigen Teigstücks (01) hergestellt ist, und wobei das Teigprodukt (02) von der Basis (03) des Teigstücks (01) her beginnend gewickelt ist, und wobei das schmalere Ende (04) des Teigstücks (01) einen außen am Umfang des Teigprodukts (02) überstehenden Schluss (05) bildet, und wobei die Schlusslage des Teigprodukts (02) durch eine bestimmte Lage des außen überstehenden Schlusses (05) definiert ist,
wobei das gewickelte Teigprodukt (02) entlang einer vorgegebenen Strecke oder für eine vorgegebene Zeit mit einem Antriebsmoment bzw. einer Antriebskraft um seine Längsachse rotierend angetrieben wird, um dadurch eine Abrollbewegung des Teigprodukts (02) auf einer Unterlage (08, 14) zu bewirken, wobei der Drehsinn der Abrollbewegung des Teigprodukts (02) der Wickelrichtung von innen nach außen des gewickelten Teigprodukts (02) entspricht, und wobei die Abrollbewegung bei Erreichen der definierten Schlusslage, bei der der Schluss (05) des Teigprodukts an der Unterlage (08, 14) anliegt, gestoppt wird,
**dadurch gekennzeichnet,**
**dass** die Abrollbewegung durch den vom Schluss (05) verursachten Rollwiderstand gestoppt wird und dass als Antriebskraft für die Abrollbewegung des Teigprodukts (02) eine Hangabtriebskraft genutzt wird, wobei die Hangabtriebskraft durch das Eigengewicht des Teigprodukts (02) auf einer geneigten Unterlage (08) verursacht wird.

2. Verfahren zum Ausrichten von gewickelten Teigprodukten (02) in einer definierten Schlusslage, wobei das Teigprodukt (02) durch Wickeln eines dreieckförmigen oder trapezförmigen Teigstücks (01) hergestellt ist, und wobei das Teigprodukt (02) von der Basis (03) des Teigstücks (01) her beginnend gewickelt ist, und wobei das schmalere Ende (04) des Teigstücks (01) einen außen am Umfang des Teigprodukts (02) überstehenden Schluss (05) bildet, und wobei die Schlusslage des Teigprodukts (02) durch eine bestimmte Lage des außen überstehenden Schlusses (05) definiert ist,
wobei das gewickelte Teigprodukt (02) entlang einer vorgegebenen Strecke oder für eine vorgegebene Zeit mit einem Antriebsmoment bzw. einer Antriebskraft um seine Längsachse rotierend angetrieben wird, um dadurch eine Abrollbewegung des Teigprodukts (02) auf einer Unterlage (08, 14) zu bewirken, wobei der Drehsinn der Abrollbewegung des Teigprodukts (02) der Wickelrichtung von innen nach außen des gewickelten Teigprodukts (02) entspricht, und wobei die Abrollbewegung bei Erreichen der definierten Schlusslage, bei der der Schluss (05) des Teigprodukts an der Unterlage (08, 14) anliegt, gestoppt wird,
**dadurch gekennzeichnet,**
**dass** die Abrollbewegung durch den vom Schluss (05) verursachten Rollwiderstand gestoppt wird und dass als Antriebskraft für die Abrollbewegung des Teigprodukts (02) Gleitreibungskräfte genutzt werden, wobei die Gleitreibungskräfte von den Borsten (15) eines umlaufenden Bürstenantriebs (13) auf das Teigprodukt (02) übertragen werden.

3. Verfahren zum Ausrichten von gewickelten Teigprodukten (02) in einer definierten Schlusslage, wobei das Teigprodukt (02) durch Wickeln eines dreieckförmigen oder trapezförmigen Teigstücks (01) hergestellt ist, und wobei das Teigprodukt (02) von der Basis (03) des Teigstücks (01) her beginnend gewickelt ist, und wobei das schmalere Ende (04) des Teigstücks (01) einen außen am Umfang des Teigprodukts (02) überstehenden Schluss (05) bildet, und wobei die Schlusslage des Teigprodukts (02) durch eine bestimmte Lage des außen überstehenden Schlusses (05) definiert ist,
wobei das gewickelte Teigprodukt (02) entlang einer vorgegebenen Strecke oder für eine vorgegebene Zeit mit einem Antriebsmoment bzw. einer Antriebskraft um seine Längsachse rotierend angetrieben wird, um dadurch eine Abrollbewegung des Teigprodukts (02) auf einer Unterlage (08, 14) zu bewirken, wobei der Drehsinn der Abrollbewegung des Teigprodukts (02) der Wickelrichtung von innen nach außen des gewickelten Teigprodukts (02) entspricht, und wobei die Abrollbewegung bei Erreichen der definierten Schlusslage, bei der der Schluss (05) des Teigprodukts an der Unterlage (08, 14) anliegt, gestoppt wird,
**dadurch gekennzeichnet,**
**dass** die Abrollbewegung durch den vom Schluss (05) verursachten Rollwiderstand gestoppt wird, dass das gewickelte Teigprodukt (02) in der vorgegebenen Strecke beschleunigt oder abgebremst wird, wobei das daraus resultierende Drehmoment als Antriebsmoment für die Abrollbewegung des Teigprodukts (02) genutzt wird und dass das gewickelte Teigprodukt (02) durch Übergabe von einem ersten umlaufend angetriebenen Förderband (19) mit einer ersten Fördergeschwindigkeit (v₁) auf ein zweites umlaufend angetriebenes Förderband (20) mit einer zweiten Fördergeschwindigkeit (v₂) beschleunigt oder abgebremst und dadurch in die gewünschte Abrollbewegung versetzt wird.

4. Verfahren nach einem der Ansprüche 1 bis 3,
**dadurch gekennzeichnet,**
**dass** das Teigstück (01) vor dem Wickeln, insbesondere durch abschnittsförmiges Walzen, so umgeformt wird, dass das den Schluss (05) bildende Ende (04) eine Verdickung des Teigstücks (01) bildet.

5. Verfahren nach einem der Ansprüche 1 bis 4,
**dadurch gekennzeichnet,**
**dass** das Teigprodukt (02) nach Erreichen der definierten Schlusslage, bei der der Schluss (05) des gewickelten Teigprodukts (02) auf der Unterlage (08, 14) anliegt, um einen definierten Winkelbetrag in eine zweite definierte Schlusslage gerollt wird.

6. Verfahren nach Anspruch 5,
**dadurch gekennzeichnet,**
**dass** der Schluss (05) des gewickelten Teigprodukts (02) in der zweiten definierten Schlusslage zwischen dem Teigprodukt (02) und der Unterlage (08, 14) zum Liegen kommt.

7. Verfahren nach Anspruch 6,
**dadurch gekennzeichnet,**
**dass** das gewickelte Teigprodukt (02) in der zweiten definierten Schlusslage gegen die Unterlage (08, 14) gedrückt wird, um den Schluss (05) des gewickelten Teigprodukts (02) gegen den Umfang des gewickelten Teigprodukts (02) zu drücken.

8. Verfahren nach einem der Ansprüche 1 bis 7,
**dadurch gekennzeichnet,**
**dass** das gewickelte Teigprodukt (02) nach der Ausrichtung in einer Schlusslage um seine Hochachse zur Annäherung der beiden Spitzen des gewickelten Teigprodukts (02) gebogen wird, insbesondere dass die beiden Spitzen des gewickelten Teigprodukts (02) miteinander in Kontakt gebracht werden.

## Claims

1. A method for orienting wound dough products (02) in a defined end position, wherein the dough product (02) is produced by winding a triangular or trapezoidal dough piece (01), and wherein the dough product (02) is wound starting from the base (03) of the dough piece (01) and wherein the narrower tip (04) of the dough piece (01) forms an end (05) protruding on the outside on the circumference of the dough product (02), and wherein the end position of the dough product (02) is defined by a specific position of the end (05) protruding on the outside,
wherein the wound dough product (02) is driven along a predefined segment or for a predefined time with a driving torque or a driving force so as to rotate about the longitudinal axis of the dough product in order to thereby effect a rolling motion of the dough product (02) on a support (08, 14), wherein the rotational direction of the rolling motion of the dough product (02) corresponds to the winding direction from the inside to the outside of the wound dough product (02), and wherein the rolling motion is stopped when the defined end position, in which the end (05) of the dough product abuts on the support (08, 14), is reached, **characterised in that**
the rolling motion is stopped by the rolling resistance caused by the end (05), and that a downhill slope force is utilised as a driving force for the rolling motion of the dough product (02), said downhill slope force being caused by the dead weight of the dough product (02) on an inclined support (08).

2. A method for orienting wound dough products (02) in a defined end position, wherein the dough product (02) is produced by winding a triangular or trapezoidal dough piece (01), and wherein the dough product (02) is wound starting from the base (03) of the dough piece (01) and wherein the narrower tip (04) of the dough piece (01) forms an end (05) protruding on the outside on the circumference of the dough product (02), and wherein the end position of the dough product (02) is defined by a specific position of the end (05) protruding on the outside,
wherein the wound dough product (02) is driven along a predefined segment or for a predefined time with a driving torque or a driving force so as to rotate about the longitudinal axis of the dough product in order to thereby effect a rolling motion of the dough product (02) on a support (08, 14), wherein the rotational direction of the rolling motion of the dough product (02) corresponds to the winding direction from the inside to the outside of the wound dough product (02), and wherein the rolling motion is stopped when the defined end position, in which the end (05) of the dough product abuts on the support (08, 14), is reached, **characterised in that**
the rolling motion is stopped by the rolling resistance caused by the end (05), and that sliding friction forces are utilised as a driving force for the rolling motion of the dough product (02), said sliding friction forces being transmitted to the dough product (02) by the bristles (15) of a circulating brush drive (13).

3. A method for orienting wound dough products (02) in a defined end position, wherein the dough product (02) is produced by winding a triangular or trapezoidal dough piece (01), and wherein the dough product (02) is wound starting from the base (03) of the dough piece (01) and wherein the narrower tip (04) of the dough piece (01) forms an end (05) protruding on the outside on the circumference of the dough product (02), and wherein the end position of the dough product (02) is defined by a specific position of the end (05) protruding on the outside,
wherein the wound dough product (02) is driven along a predefined segment or for a predefined time with a driving torque or a driving force so as to rotate about the longitudinal axis of the dough product in order to thereby effect a rolling motion of the dough product (02) on a support (08, 14), wherein the rotational direction of the rolling motion of the dough product (02) corresponds to the winding direction from the inside to the outside of the wound dough product (02), and wherein the rolling motion is stopped when the defined end position, in which the end (05) of the dough product abuts on the support (08, 14), is reached, **characterised in that**
the rolling motion is stopped by the rolling resistance caused by the end (05), and that the wound dough product (02) is accelerated or decelerated in the predefined segment, the resulting torque being utilised as a driving torque for the rolling motion of the dough product (02), and that the wound dough product (02) is accelerated or decelerated by being transferred from a first continuously driven conveyor belt (19) with a first conveying speed (v₁) to a second continuously driven conveyor belt (20) with a second conveying speed (v₂) and is thereby set in the desired rolling motion.

4. The method according to any of the claims 1 to 3,
**characterised in that**
prior to being wound, the dough piece (01) is reshaped, in particular by means of a sectional rolling-out, in such a manner that the tip (04) forming the end (05) forms a bulge of the dough piece (01).

5. The method according to any of the claims 1 to 4,
**characterised in that**
after having reached the defined end position, in which the end (05) of the wound dough product (02) abuts on the support (08, 14), the dough product (02) is rolled by a defined angle into a second defined end position.

6. The method according to claim 5,
**characterised in that**
in the second defined end position, the end (05) of the wound dough product (02) comes to rest between the dough product (02) and the support (08, 14).

7. The method according to claim 6,
**characterised in that**
in the second defined end position, the wound dough product (02) is pressed against the support (08, 14) so that the end (05) of the wound dough product (02) is pressed against the circumference of the wound dough product (02).

8. The method according to any of the claims 1 to 7,
**characterised in that**
after being oriented in an end position, the wound dough product (02) is bent around its vertical axis so as to bring the two tips closer together, in particular that the two tips of the wound dough product (02) are brought into contact with one another.

## Revendications

1. Procédé pour aligner des produits de pâte enroulés (02) dans une position finale définie, le produit de pâte (02) étant produit en enroulant une pièce de pâte (01) triangulaire ou trapézoïdale, et le produit de pâte (02) étant enroulé en partant de la base (03) de la pièce de pâte (01), et l'extrémité (04) plus étroite de la pièce de pâte (01) formant un bout (05) faisant saillie à l'extérieur sur la circonférence du produit de pâte (02), et la position finale du produit de pâte (02) étant définie par une position spécifique du bout (05) faisant saillie à l'extérieur,
le produit de pâte (02) enroulé étant entraîné de manière rotative autour de son axe longitudinal le long d'un trajet prédéterminé ou pour un temps prédéterminé par un couple d'entraînement ou une force d'entraînement pour provoquer ainsi un mouvement de roulement du produit de pâte (02) sur un support (08, 14), le sens de rotation du mouvement de roulement du produit de pâte (02) correspondant au sens d'enroulement de l'intérieur à l'extérieur du produit de pâte (02) enroulé, et le mouvement de roulement étant arrêté quand les produits de pâte enroulés (02) atteignent la position finale définie dans laquelle le bout (05) du produit de pâte (02) repose sur le support (08, 14), **caractérisé en ce que**
le mouvement de roulement est arrêté par la résistance au roulement causée par le bout (05) et qu'une force de déclivité sert comme force d'entraînement pour le mouvement de roulement du produit de pâte (02), la force de déclivité étant causée par le poids propre du produit de pâte (02) sur un support (08) incliné.

2. Procédé pour aligner des produits de pâte (02) enroulés dans une position finale définie, le produit de pâte (02) étant produit en enroulant une pièce de pâte (01) triangulaire ou trapézoïdale, et le produit de pâte (02) étant enroulé en partant de la base (03) de la pièce de pâte (01), et l'extrémité (04) plus étroite de la pièce de pâte (01) formant un bout (05) faisant saillie à l'extérieur sur la circonférence du produit de pâte (02), et la position finale du produit de pâte (02) étant définie par une position spécifique du bout (05) faisant saillie à l'extérieur,
le produit de pâte (02) enroulé étant entraîné de manière rotative autour de son axe longitudinal le long d'un trajet prédéterminé ou pour un temps prédéterminé par un couple d'entraînement ou une force d'entraînement pour provoquer ainsi un mouvement de roulement du produit de pâte (02) sur un support (08, 14), le sens de rotation du mouvement de roulement du produit de pâte (02) correspondant au sens d'enroulement de l'intérieur à l'extérieur du produit de pâte (02) enroulé, et le mouvement de roulement étant arrêté quand les produits de pâte atteignent la position finale définie dans laquelle le bout (05) du produit de pâte (02) repose sur le support (08, 14),
**caractérisé en ce que**
le mouvement de roulement est arrêté par la résistance au roulement causée par le bout (05) et que des forces de frottement de glissement servent comme force d'entraînement pour le mouvement de roulement du produit de pâte (02), les poils (15) d'un entraînement de brosse (13) circulant transmettant les forces de frottement de glissement au produit de pâte (02).

3. Procédé pour aligner des produits de pâte (02) enroulés dans une position finale définie, le produit de pâte (02) étant produit en enroulant une pièce de pâte (01) triangulaire ou trapézoïdale, et le produit de pâte (02) étant enroulé en partant de la base (03) de la pièce de pâte (01), et l'extrémité (04) plus étroite de la pièce de pâte (01) formant un bout (05) faisant saillie à l'extérieur sur la circonférence du produit de pâte (02), et la position finale du produit de pâte (02) étant définie par une position spécifique du bout (05) faisant saillie à l'extérieur,
le produit de pâte (02) enroulé étant entraîné de manière rotative autour de son axe longitudinal le long d'un trajet prédéterminé ou pour un temps prédéterminé par un couple d'entraînement ou une force d'entraînement pour provoquer ainsi un mouvement de roulement du produit de pâte (02) sur un support (08, 14), le sens de rotation du mouvement de roulement du produit de pâte (02) correspondant au sens d'enroulement de l'intérieur à l'extérieur du produit de pâte (02) enroulé, et le mouvement de roulement étant arrêté quand les produits de pâte atteignent la position finale définie dans laquelle le bout (05) du produit de pâte (02) repose sur le support (08, 14),
**caractérisé en ce que**
le mouvement de roulement est arrêté par la résistance au roulement causée par le bout (05) et que le produit de pâte (02) enroulé est accéléré ou décéléré dans le trajet prédéterminé, le couple de rotation qui en résulte servant comme couple d'entraînement pour le mouvement de roulement du produit de pâte (02) et que le produit de pâte (02) enroulé est accéléré ou décéléré en étant transféré d'une première bande transporteuse (19) entraînée de manière à circuler à une première vitesse transporteuse (v₁) à une deuxième bande transporteuse (20) entraînée de manière à circuler à une deuxième vitesse de transport (v₂), ce qui met le produit en mouvement de roulement désiré.

4. Procédé selon l'une quelconque des revendications 1 à 3, **caractérisé en ce que**
la pièce de pâte (01) est transformée avant l'enroulement en particulier par laminage en sections de telle manière que l'extrémité (04) formant le bout (05) forme une protubérance de la pièce de pâte (01).

5. Procédé selon l'une quelconque des revendications 1 à 4,
**caractérisé en ce que**
le produit de pâte (02) est roulé dans une deuxième position finale définie selon une valeur angulaire définie après avoir atteint la position finale définie dans laquelle le bout (05) du produit de pâte (02) enroulé repose sur le support (08, 14).

6. Procédé selon la revendication 5,
**caractérisé en ce que**
le bout (05) du produit de pâte (02) enroulé s'arrête entre le produit de pâte (02) et le support (08, 14) dans la deuxième position finale définie.

7. Procédé selon la revendication 6,
**caractérisé en ce que**
le produit de pâte (02) enroulé est poussé contre le support (08, 14) dans la deuxième position finale définie pour pousser le bout (05) du produit de pâte (02) enroulé contre la circonférence du produit de pâte (02) enroulé.

8. Procédé selon l'une quelconque des revendications 1 à 7,
**caractérisé en ce qu'**
après l'alignement dans une position finale, le produit de pâte (02) enroulé est courbé autour de son axe vertical pour rapprocher les deux pointes du produit de pâte (02) enroulé, en particulier **en ce que** les deux pointes du produit de pâte (02) enroulé sont mises en contact l'une avec l'autre.
